Europäisches Patentamt

European Patent Office

Office européen des brevets

(11) Publication number: **0 483 777 A2**

# EUROPEAN PATENT APPLICATION

(21) Application number: **91118455.4**

(22) Date of filing: **29.10.91**

(51) Int. Cl.⁵: **G06F 3/033**

(30) Priority: **31.10.90 US 606227**

(43) Date of publication of application:
**06.05.92 Bulletin 92/19**

(84) Designated Contracting States:
**DE ES FR GB IT SE**

(71) Applicant: **Hewlett-Packard Company**
**3000 Hanover Street**
**Palo Alto, California 94304(US)**

(72) Inventor: **Mathis, Barry R.**
**1433 McBain Avenue**
**Campbell, California 95008(US)**
Inventor: **Kobara, Shizunori S.**
**301 Spinnaker Street**
**Foster City, California 94404(US)**
Inventor: **Anderson, Stephen R.**
**620 Chesley Avenue**
**Mountain View, California 94040(US)**

(74) Representative: **Liesegang, Roland, Dr.-Ing. et al**
**FORRESTER & BOEHMERT**
**Franz-Joseph-Strasse 38**
**W-8000 München 40(DE)**

(54) **Three dimensional graphic interface.**

(57) A method of graphically depicting the operation of a computer. The method includes depicting a functional aspect of a task by means of a three-dimensional abstraction (84, 86, 88) such as an icon and depicting the operation of the computer by varying the appearance of the abstraction over time. In one aspect of the invention, a window (82) displays scaled-down versions of files to indicate that the files are open but not active. In another aspect, a linear array of three-dimensional abstractions (84, 86, 88) is provided along an edge of the video display, some of the abstractions (84, 86) suggestive of a function accessible without respect to any particular application and others (88) suggestive of a group of applications. In another aspect, a three-dimensional abstraction is used to suggest a file cabinet (90) having containers (92, 94) such as drawers, notebooks and the like for files and other objects. In another aspect, the display includes a plurality of abstractions (120) suggestive of controls of a device being emulated by the computer. In another aspect, a transporter is depicted by a frame (123) on a background (125) which encloses an abstraction (133) suggestive of data to be transmitted between the computer and a remote location; alternately highlighting opposite sides of the frame, sequentially highlighting different ones of a set of nested frames (137, 139) and fading the abstraction between a distinct image (133) and an indistinct image (135) provide a visual representation of transmitting the data to, and receiving the data from, the remote location.

Notice how some of these root level windows tend to get themselves buried under their children. It is apparent that some techniques will be required to make these crucial windows readily accessible.

Certain window types might want to take on helpful visual characteristics, such as this Folder with a Tab at the top, which makes it immediately recognizable. Lots of other Container objects are possible, like cassettes for video or audio files, or notebooks, shelves, slide trays, etc.

The various container objects might carry with them color codes to help the user track their relationships

...e of the ...cted items could appear to minimize the exposure of the document contents. When activated the window could grow its header back again. To move such a window you would just click the mouse near the top to activate it, and then slide up to the titlebox to grab it and move it to its new location.

**FIG 7**

This application is related to EP 89 113 701.0 ( = FB 2715) the disclosure of which is incorporated herein by reference.

## Background of the Invention

The present invention is directed to an interface between a user of a computer and the program or programs being executed by the computer. More particularly, the invention is directed to a graphic interface which presents a cohesive three-dimensional appearance to thereby provide a realistic and comprehensible view of the tasks being carried out by the computer.

To execute a program loaded into a computer, it is necessary for the user to enter commands which are associated with the particular program being executed. Users who frequently run a program are typically familiar with the commands for the program, and can therefore enter them without the need to refer to documentation or to be prompted by the program itself in order to determine the appropriate commands. However, with the widespread popularity of personal computers and the proliferation of software written for those computers, many users are not intimately familiar with all of the necessary commands and protocols for the various programs they may desire to run. As a result, many programs are written in a "user-friendly" format, by which the user is apprised of the functions capable of being performed by the program and prompted for appropriate commands through the use of menus and/or symbols which appear on the video screen of the user's computer. When a user selects a particular function to be performed, a display of the choices available to the user within the context of that function may appear on the screen in one of a number of possible formats. When a particular item is chosen from the displayed options, the user may be prompted for additional selections that enable the function to be carried out according to his or her desires.

As a further step toward the objective of facilitating the user's comprehension and access to program functionality, some programs have employed a visual metaphor of a desktop to serve as an interface between the user and the program. In this visual metaphor, information relating to each program that is being executed, as well as each task being performed within the program, is displayed on a preselected area of the screen, often referred to as a "window". The various windows on a screen can be likened to sheets of paper lying on a desktop. The window pertaining to the program currently being executed, or the task within that program that is currently being performed, is typically represented as overlaying the other windows on the screen, in much the same manner as the sheet of paper or file relating to a current task would lie on top of papers or files on a desktop relating to other active tasks. This approach to presenting the information to the user on the video screen enables the user to focus upon a task appearing in a particular window, but to be conscious of other tasks to be performed as represented by the visible portions of other windows appearing on the screen.

While the use of the visual metaphor has greatly enhanced the user's ability to manage multiple ongoing tasks in the execution of a program, it is desirable to provide an improved form of graphic interface which further increases the user's capabilities in this regard. More particularly, the visual metaphors that have been employed in the past have been largely two-dimensional in nature. In other words, the windows associated with various programs and tasks can be arranged anywhere within the width and height of the video screen. If a number of windows are presented at one time, it can be appreciated that the screen can begin to appear cluttered, in much the same manner as a desk with a large number of papers on it. For example, various types of multi-tasking software enable two or more applications to be run on a computer simultaneously. If each application has a number of individual windows associated with it, the video screen will quickly become filled with portions of windows.

In a real world situation, when large numbers of papers or files begin to accumulate on a desk, they are often stacked upon one another, to maintain organization. However, when windows are stacked upon one another in a two-dimensional desktop metaphor, the user loses sight of all but the topmost window. Accordingly, it is desirable to give the impression of depth, as well as height and width to the visual metaphor, in order to provide the user with a more realistic, and hence more easily manageable, representation of his work load. Further in this regard, it is desirable to be able to provide each of the elements used in the metaphor with the attributes of physical objects, to thereby provide more realistic feedback to the user as he or she selects and operates upon individual elements to control the program.

## Brief Statement of the Invention

In accordance with the present invention, a comprehensive approach is used in the display of graphical elements to provide increased visual appeal to the user as well as increased clarity of information. A characteristic depth, as well as height and width, is given to each of the elements that is employed to provide information to the user, to thereby present a cohesive three-dimensional appearance to the entire visual metaphor which makes up the interface. In one aspect of the invention, every graphic element, such as a window border, an icon, or a box, is represented with the use of at least three shades of color. The body of the element is represented by a main, or base color. One edge of the element, or preferably two adjacent edges (for rectangular elements), are highlighted with a lighter shade of color, and the opposite edge or adjacent edges are shaded with a darker shade of color. This approach causes each element to appear as if it is raised or recessed relative to a background surface, in dependence upon the respective edges which are chosen for the highlighting and the shading.

In a further aspect of the invention, this approach is also applied to individual features of symbols shown within elements as well as to the borders of the elements themselves. Thus, the image of an object represented within an icon appears to be raised above or recessed below a base surface, to provide the three dimensional effect. In a further application of this approach, elements such as boxes are appropriately highlighted and shaded to provide the appearance of a solid object having mass within a window, and the components typically contained within such boxes, such as selection buttons or bars, are highlighted and shaded to appear as objects mounted on this solid object.

In another aspect of the invention, shadows are employed to provide the impression that multiple windows are spaced from one another in a depth direction. To further enhance the realistic impression, the edges of the shadows are contoured in accordance with the topology of the underlying objects upon which they are cast. To insure that the shadows do not obliterate underlying windows, they can be made transparent so that the user can determine the contents of windows lying beneath the shadow.

Further features of the invention facilitate the user's recognition of an active task or session along with comprehension of other sessions that are open but not presently active. These features include highlighting an active window, and removing currently non-functional components from inactive windows. To enable the user to distinguish between similar files representing inactive sessions, the files can be represented by scaled-down versions of inactivated sessions, and appear in a window or special location on the screen which is dedicated to files. Color can be employed to enhance the user's comprehension of transitions from one work environment to another.

To enable the user to more easily recall all of the files stored th the computer, including those which are not open, a visually oriented file space providing a visual metaphor of different types of file containers can be provided. These containers are more readily recognizable to the user and can be accessed with greater ease than a conventional textual file directory, to enable the user to ascertain and retrieve the files stored in the computer. To keep the area of the screen as clutter-free as possible, the window for the reduced files and the file space can be on sliding panels that are selectively removed from view and retrieved as needed.

In another aspect of the invention, various hardware items and software functions are simulated within windows on the video screen to facilitate the user's comprehension of operations being performed by the computer. For example, the control panel of an item such as a tape player or a television is displayed along one border of a window when the computer is simulating the operation of that equipment. To control this simulated operation of the item, the user accesses control panel elements such as buttons to provide a more realistic and familiar type of control.

Software functions are also graphically simulated according to the teachings of the invention. Transmission of data between two computers is depicted by the gradual disappearance of an icon representing the data from the screen of the sending computer and the gradual appearance of a similar icon on the screen of the receiving computer. This metaphor is further enhanced by simulating movement of the icon away from the user at the sending computer and towards the user at the receiving computer, for example by sequentially emphasizing spaces between nested frames that surround the icon on the screen.

A further explanation of these and other features, as well as the manner in which the invention achieves a comprehensive three-dimensional appearance to the visual metaphor, is set forth hereinafter with reference to specific examples and embodiments illustrated in the accompanying drawings.

## Brief Description of the Drawings

Figures 1A-1C are illustrations contrasting conventional two dimensional representations of icons with the three-dimensional approach employed in the present invention;

Figure 1D is an enlarged view of a three-dimensional icon similar to that shown in Figure 1A, illustrating the highlighting and shading of the border of the icon in greater detail;

Figure 2 is an illustration of a window containing various components that are presented in accordance with the principles of the present invention;

Figure 2A is an enlarged view of a portion of the dialog box panel illustrated in Figure 2;

Figure 3 is an illustration of a video screen containing multiple windows;

Figure 4 is another representation of a video display containing several windows, illustrating the use of shadows;

Figure 5 is another depiction of a screen containing multiple windows, illustrating the use of a pinup board;

Figure 6 is a depiction of a screen containing an icon dashboard;

Figure 7 is a depiction of a screen containing a file space window;

Figure 8 is a depiction of a video screen having the pinup board and file space windows appearing on sliding panels, and using one-point perspective to provide the impression of depth;

Figure 9 is a view similar to Figure 8, with the sliding panels slid out of view and further illustrating the use of one-point perspective;

Figure 10 is a view of a video replay window which simulates the controls of a machine being emulated on the computer;

Figure 11 is a view of a transporter that simulates the transmission of data from a computer to a remote location;

Figure 12 a a view of an icon image within a transporter during a transmission operation; and

Figure 13 is a block diagram illustrating the architecture of a system for implementing the present invention.

## Description of the Illustrated Embodiments

As noted above, an underlying concept of the present invention is to employ a comprehensive approach to the three-dimensional depiction of elements on a screen, to provide the user with the impression that the entire image being viewed has depth and that individual objects within the image have solidity and mass. To facilitate an understanding of the invention, this concept will be described with reference to some features of a conventional windowing program, such as Microsoft Windows$_T$M, sold by Microsoft Corporation. Implementation of the concepts underlying the invention does not affect the functionality of the windowing program, and therefore such aspects of the program will not be described in detail herein. Rather, the discussion of the invention will concentrate on the graphical features and visual effects provided by the invention.

It was known in the past to apply drop shadows to individual elements of a graphical display in an attempt to impart a three-dimensional characteristic to those particular elements. Basically, a drop shadow consists of an opaque dark line appearing along the right hand and lower edges of an object, such as an icon. This dark line has a constant width, typically one or two pixels. Even when drop shadows are employed on selective objects, however, the overall image appearing on the screen still appears to be only two-dimensional in nature. In contrast, through the comprehensive application of three-dimensional imaging effects to all of the elements displayed in an image, the graphic interface of the present invention provides a cohesive appearance which gives a realistic three-dimensional impression.

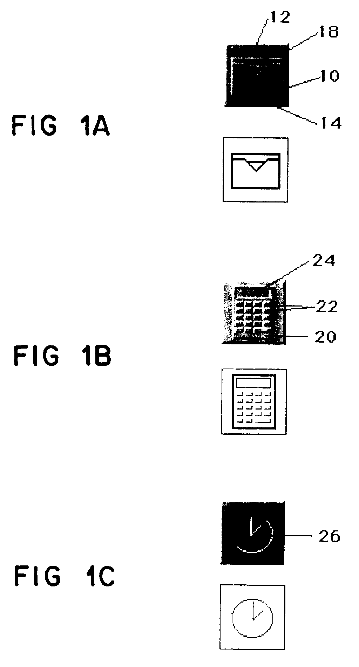

The imaging effects which are employed in the context of the present invention will first be explained with reference to individual components that can appear in a displayed interface. In the illustrated embodiments, the particular components which are used to illustrate these effects are icons. Figures 1A, 1B and 1C respectively illustrate images of icons for a folder, a calculator and a clock. The three-dimensional images of these icons, generated in accordance with one aspect of the present invention, are shown at the top of each figure, and contrasted with conventional two-dimensional depictions of the icons shown at the bottom of each figure.

Referring to Figure 1A, the body 10 of the element, i.e., the icon of a folder, is represented on the video screen by means of a base, or main color. In addition to the main color that is used for the body 10 of the element, a lighter tint 12 and a darker tint 14 of the main color are employed to indicate the edges of the element in a manner which creates a three-dimensional effect. For each of the elements depicted in Figures 1A, 1B and 1C, the upper and left-hand edges of the element are indicated by a lighter tint 12, and the opposite edges, i.e., the lower and right-hand edges, are indicated by a tint 14 which is darker than the base color. By means of this arrangement, a three-dimensional impression is created in which it appears that a light from an imaginary source is shining over the user's left shoulder onto the element. If desired, it is possible to highlight and shade only two opposite edges of the icon, rather than all four edges. For example, the top edge could be highlighted and the bottom edge shaded, while the two side edges are defined by the main color. In this example, a light would appear to be shining from a location directly above the user.

Throughout the following description of the invention, the term "color" is to be interpreted in a general sense to refer to video images displayed on monochrome monitors as well as those appearing on so-called color monitors which present images having red, green and blue components. Thus, reference in the text to "lighter" and "darker" colors or tints of colors refers not only to different hues or tones of the colors, but also to different gray scale values for a monochrome color.

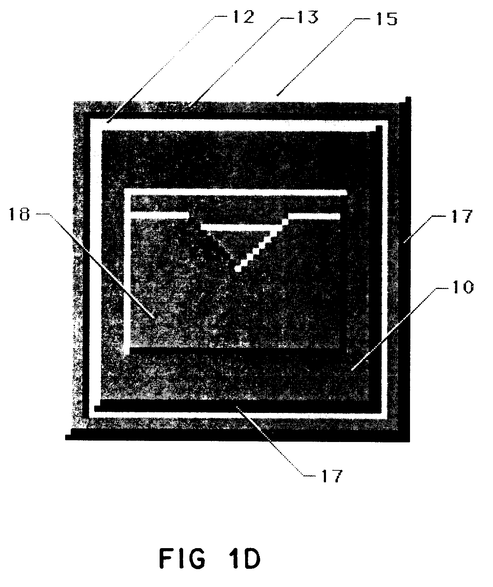

The use of highlighting and shading on opposite edges of the component is illustrated with greater clarity in Figure 1D, which comprises an enlarged view of an icon similar to that shown in Figure 1A. This icon differs slightly from that shown in Figure 1A, however, in that it is provided with an outer border or frame 13. The outer frame is also represented by the main color, and its edges are appropriately highlighted, at 15, and shaded, at 17, in a manner consistent with the highlighting and shading of the edges of the main body of the icon itself.

The use of the lighter and darker colors is employed not only for the border of the component itself, but also to indicate the individual features of any object or symbol displayed within the component. Thus, with reference to Figure 1A, the upper and left hand edges of the layers of the folder 18 are highlighted by means of the lighter tint, and the lower and right-hand edges of the folder are shaded by the darker tint. Thus, the folder itself appears as a three-dimensional object which is raised above a surface defined by the body 10 of the icon.

In general, the three-dimensional effect is attained with the use of three color tints, a base color, a lighter highlight tint and a darker shading tint. In a preferred embodiment of the invention, the highlight tint is about 35-45% lighter than the base color, most preferably 40% lighter, and the darker tint is also about 35-45% darker, and most preferably 40% darker, than the base color. If desirable, more than one basic color can be employed. For example, the highlighting and shading at the edges of the folder 18 could be different colors from that used to indicate the borders of the icon itself.

In the folder icon depicted n Figure 1A, all of the upper and left-band edges of the icon border and the individual folder features are highlighted whereas the lower and right-hand edges of each feature are shaded, to create the impression of raised elements. Referring to Figure 1B, a similar approach is employed for the body 20 of the calculator and each of its buttons 22, to again create the impression that the calculator rises above the surface of the icon and the buttons project upward from that body. However, an opposite arrangement is employed for the display 24 of the calculator, to create the impression that it is recessed within the body 20. More particularly, the upper and left-hand edges of the display are shaded with the darker tint, whereas the lower and right-hand edges are highlighted with the lighter tint. A similar approach is used in the clock icon of Figure 1C, in which the upper and left-hand edges of the clock are shaded while the lower and right-hand edges are highlighted, to create the impression that the face 26 of the clock is recessed into the surface of the icon. A consistent approach is used for the highlighting and shading throughout the image, in accordance with the location of the imaginary light source noted previously.

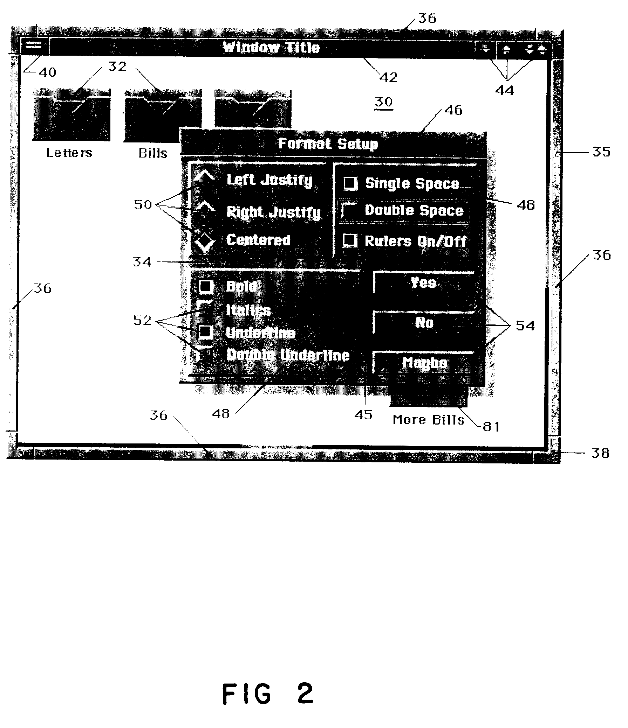

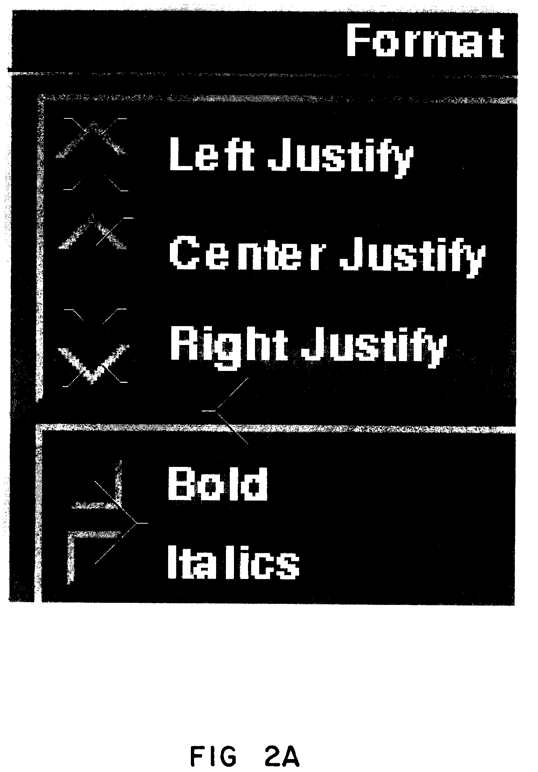

Figure 2 illustrates the manner in which these imaging techniques are applied to the total display to provide a comprehensive three-dimensional impression. This figure depicts a single window 30 that may be associated with a word processing system. The window 30 contains depictions of folders 32 relating to different files that can be opened by the user, and a dialog box 34, which enables users to configure the format of documents.

As is conventional in a windowing system, the border of the window 30 is defined by a frame 35. In accordance with the principles of the present invention, the individual elements which make up the frame are provided with highlighting and shading, as described in reference to the previous figures. Thus, the upper and left hand edge of each elongated member 36 of the frame is highlighted, and the lower and right hand edges of these members are shaded. If the frame is provided with corner elements 38, for example to assist in the sizing of the window on the video screen, the edges of these elements are similarly highlighted and shaded.

In addition to the elongated member 36, the top portion of the window is provided with a control menu box 40, a title bar 42, and various sizing boxes 44. These elements can be employed in a conventional fashion to enable the user to call up a menu relating to basic functions associated with the window, relocate the window in the video display, and change the size of the window on the screen or iconize the window, for example. Again, each of these components is provided with the highlighting and shading to maintain the three-dimensional appearance of the displayed structure. Similarly, symbols illustrated within each element, such as the space bars on the control menu box 40 and the arrowheads on the sizing boxes 44, are provided with highlighting and shading, to create the impression of a non-planar topology for the illustrated structure.

When multiple windows are presented on the video screen it is often helpful to provide an indication to the user of the currently active window. In the context of the present invention, this purpose can be accomplished by changing color or shading along the elements 36, 38, 40, 42 and 44 of the active window. This makes the active window more prominent and thus readily recognizable by the user.

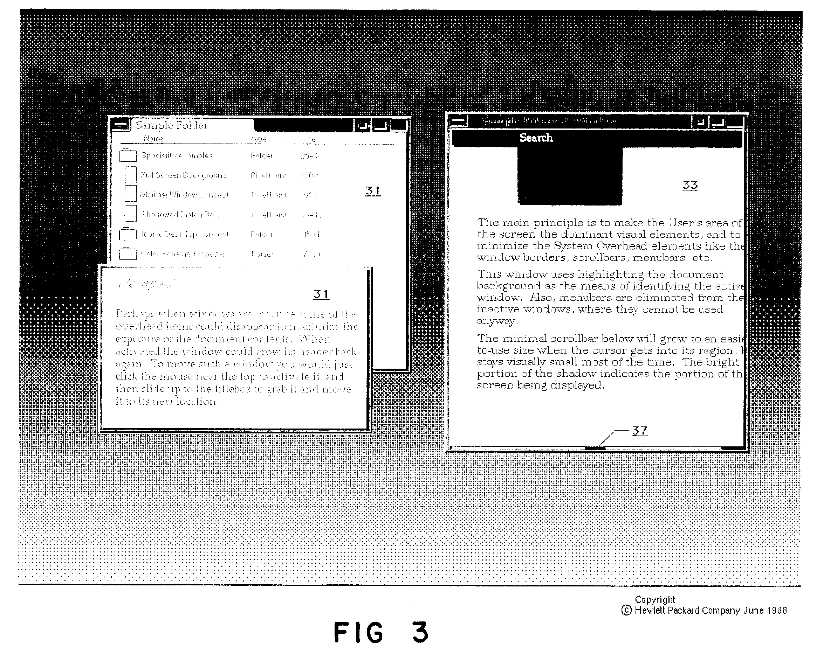

To further facilitate a recognition of the active window among multiple windows, the user's workspace within the border of the windows can be highlighted, as shown in Figure 3. To this end, the workspace areas 31 of the other windows can be made darker, so that the workspace 33 of the active window is the brightest part of the screen, and thereby easily recognizable. This approach focusses the user's attention on the active document, and away from other features on the screen which may serve as distractions.

Further along these lines, components of non-active windows which are not currently usable can be removed, to eliminate possible distractions. For example, when a window is inactive, its menu bar cannot be used to perform any functions. Therefore, it can be removed from the display, as shown with respect to the two left-hand windows in Figure 3. With this approach, the portion of the screen available for the display of usable information is maximized.

Another feature which can be employed to enhance the recognition of the workspace is to create a dark shadow effect 35 along two edges of the workspace, such as the bottom and right edges. This effect makes the workspace appear as a plane positioned above the window frame, thereby resembling a piece of paper on top of a clipboard, or the like. If desired, the scroll bar 37 that is conventionally employed to shift the contents within the window can be incorporated within the shadow 35. As shown in Figure 3, the width of the scroll bar can normally be quite narrow, since the user need only be aware of its presence. However, when a cursor (not shown) is brought close to the scroll bar, its width can increase to make it easier for the user to grab and move it as desired. Again, this feature maximizes workspace area in favor of the depiction of functional components that are not being currently employed.

In accordance with another aspect of the invention, the dialog box 34 (Figure 2) is presented to the user as a physical structure which has mass and solidity. To this end, the body of the box 34 is illustrated with a main color, and its edges are appropriately highlighted and shaded to create the impression that the box represents a panel 45. If desired, the panel can be provided with a title bar 46 to assist in moving it within the confines of the window 30. The edges of this title bar are also appropriately highlighted and shaded in a manner consistent with the highlighting and shading of the panel itself.

The particular example of a dialog box illustrated in Figure 2 contains three main subjects, which respectively relate to the location of the text on the page, the spacing of lines, and the attributes of characters. These subjects are separated within the panel by means of subpanels 48 which are appropriately highlighted and shaded to indicate that they are raised above the surface of the main panel 45 defining the box. Each subpanel 48 contains a listing of the selections available for the subject of interest, and an appropriate selection component adjacent each listing to enable the user to make a selection. If only one choice can be selected from the available options, as shown, for example, in the upper left hand subpanel relating to the location of the text on the page, the selection components comprise mutually exclusive operators known as radio buttons 50. Within this panel, the top two radio buttons are depicted as being raised above the surface of the subpanel and the lowest button is provided with an opposite type of shading and highlighting, to create the impression that it is recessed below the surface of the subpanel. In other words, the lowest button appears to have been pushed by the user, to indicate that he has selected the "Right Justify" option. Preferably, this reversing of the highlighting and shading occurs as the user makes the selection, for example by striking an "Enter" key or clicking a mouse button. This type of effect provides the user with the impression that he is interacting with a dynamic element, i.e., a physically moving button, through graphic animation.

If more than one choice can be selected within a particular subject area, the selection components are illustrated as check buttons 52, as shown in the other two subpanels on the menu 34. Again, these check buttons 52 are depicted as being raised above the surface of the subpanel if they have not been selected, and depressed below its surface if the user has selected the options associated with them, to provide the dynamic feedback.

When a button is depicted as having been depressed, the main part of the button can remain the same color, as shown with respect to the lowest one of the radio buttons 50. Alternatively, the center of the button can be inverted, e.g., made dark, as shown with respect to the check button 52 associated with the "Underline" option

In addition to the subpanels, the main panel 45 also includes three raised buttons 54 which can be selected, or pushed, by the user to respectively indicate whether he or she would like to accept the format options illustrated by the depressed selection components, cancel those selections, or request additional help regarding the selections.

As can be seen from the illustration of Figure 2, the highlighting and shading of each of the individual components, as well as the panel, creates the overall impression that the dialog box comprises a separate integrated structure having mass, rather than a series of items drawn on a sheet of paper. Figure 2A comprises an enlarged portion of the dialog box panel 45 and subpanels 48 shown in Figure 2, to more clearly illustrate the use of the highlighting and shading. This figure also illustrates the manner in which more than two colors or tints can be used for the highlighting and shading. Referring to each of the radio buttons, it can be seen that the highlighted edges are defined by a light color 49 and a very light color 51. Similarly, the shaded edges are represented by a dark color 53 and a very dark color 55. Preferably, the very light color 51 and the very dark color 55 are on opposite edges.

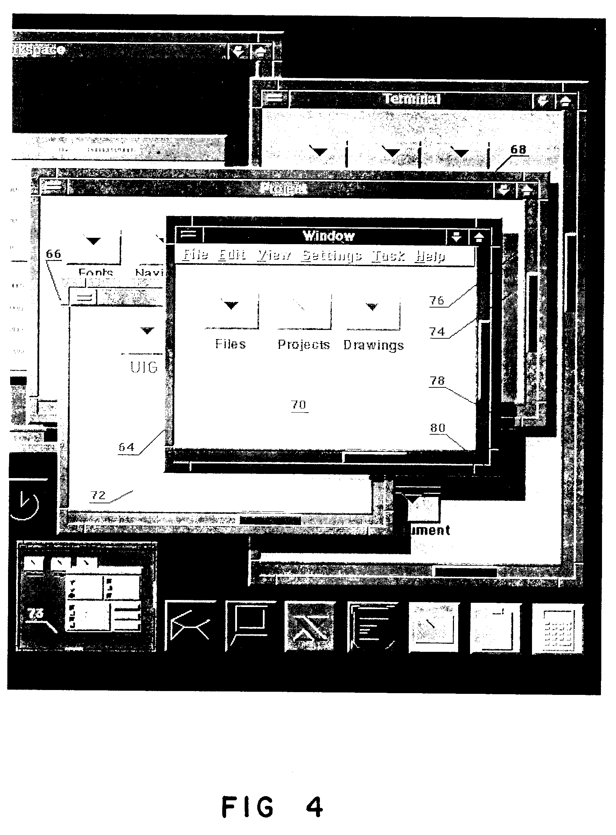

In addition to individual components and integrated structures, multiple windows are presented on the video screen in a fashion which presents the impression that the image has overall depth, to thereby complete the impression that it is truly three-dimensional in nature. This approach is carried out with the use of shadows and appropriate shading for the individual windows. Figure 4 illustrates an example of a portion of the video screen having six windows and a number of various icons depicted thereon. As is conventional, the active window, i.e., the one within which the user is currently working, is displayed as the topmost window 64 which overlies all the other windows. If desired, these other windows can be successively displayed as being beneath the active window in order of their usage, i.e., the next most recently used window 66 could appear immediately below the active window 64, the second most recently used window 68 could appear immediately below that, and so on.

To enhance the impression that the windows are spaced from one another in the depth direction the workspace area of the windows are represented with successively darker shades of color. Referring to Figure 4, the workspace area 70 of the active window 64 is illustrated with the brightest color, e.g., white, as described previously. The workspace area 72 of the next lowest window 66 is slightly darker in color, and the workspace areas of the other windows become successively darker as one proceeds in the depth direction. By way of example, the workspace area of each successive window can be 10% darker than the workspace area of the window lying immediately above it. Alternatively, the amount by which each successive window's workspace area becomes darker can be made dependent upon the number of displayed windows, so that the difference in darkness of adjacent windows decreases as the number of windows increases.

To further enhance the impression of depth, the size of a window, including all of its component features and the information contained therein, can be made proportionately smaller as the window becomes located further back in the display. The window 73 shown in Figure 4 illustrates an example of a window which has been proportionately reduced in size to create the impression that it is located very deep within the displayed image.

Each window is also provided with a shadow to illustrate its displacement from other structures below it. The location of the shadow is consistent with the highlighting and shading applied to individual structures. Thus, for the examples illustrated in the drawings, the shadows are shown to the right and bottom of the associated windows. The widths of the shadows vary from one window to the next, to create the impression that the windows are at varying depths from one another. Further, edges of the shadows are not represented as straight lines, as was conventionally done with drop shadows. Rather, they are contoured in accordance with the topology of the structures upon which they are cast, to further enhance the impression that these structures have a three-dimensional characteristic.

For example, with reference to the right hand edge of the shadow 74 cast by the active window 64, it can be seen its top portion is defined by a relatively straight line 76 where the edge of the shadow lies on the flat workspace for the window 68. At the bottom portion of the frame of the window 68, the edge of the shadow 74 is recessed to the left at 78, to indicate that the frame protrudes above the surface of the workspace for the window. Similarly, below the frame the edge of the shadow 74 extends farther to the right at 80, to indicate that the workspace of the next succeeding window is located at a deeper distance from the active window 64.

In practice, the shadows are simulated by generating additional windows, with these additional windows having a uniform color throughout in accordance with the desired color of the shadow. In order that the shadows not obliterate too large a portion of the screen, they are preferably made transparent. For example, the shadow can be generated as a see-through window that is represented by an intermediate gray-scale value or color tone and that enables the highlighting and shading of underlying elements to be seen by the user. Thus, the user can readily ascertain the contents of the lower windows even if they have a shadow cast upon them. As a window is moved, the edges of the shadow dynamically shift in accordance with the topology of the lower structures over which the window is being moved.

The use of shadows is not confined to windows. Rather, as shown in Figure 2, dialog box panels and menu panels can also cast shadows, to further enhance the impression that they are physical structures separate from the window workspace areas. Again, the edges of the shadows are preferably contoured in accordance with the position of any underlying objects, as shown with respect to the icon 81 illustrated in Figure 2, to enforce the impression of depth in the displayed image.

In addition to the foregoing features which contribute to a comprehensive three-dimensional effect in the user interface, other approaches can be employed to facilitate the user's comprehension and recognition of the information contained on the screen. One such approach is with respect to the use of icons. In conventional windowing programs, each application that is being run has its own document icon In many cases, the icons used to designate files tend to be similar, and in some cases identical. For example, if a user is running a spreadsheet program, two different worksheets created within that program may be resembled by identical icons which are generated as the user completes each worksheet and moves on to another. When the user desires to retrieve one of the iconized worksheets, it is not possible for him to tell which icon pertains to which worksheet. As a result, he must access one of the icons, for example by clicking a button on a mouse when the cursor is located over the icon. Such an action causes the title of the icon to appear on the screen, and from this the user may be able tc determine whether the icon pertains to the worksheet of interest. A difficulty arises, however, if the user has not seen the worksheets for a period of time, and therefore cannot remember their titles, or if they were created by another person, in which case the current user may not understand the meaning behind the titles.

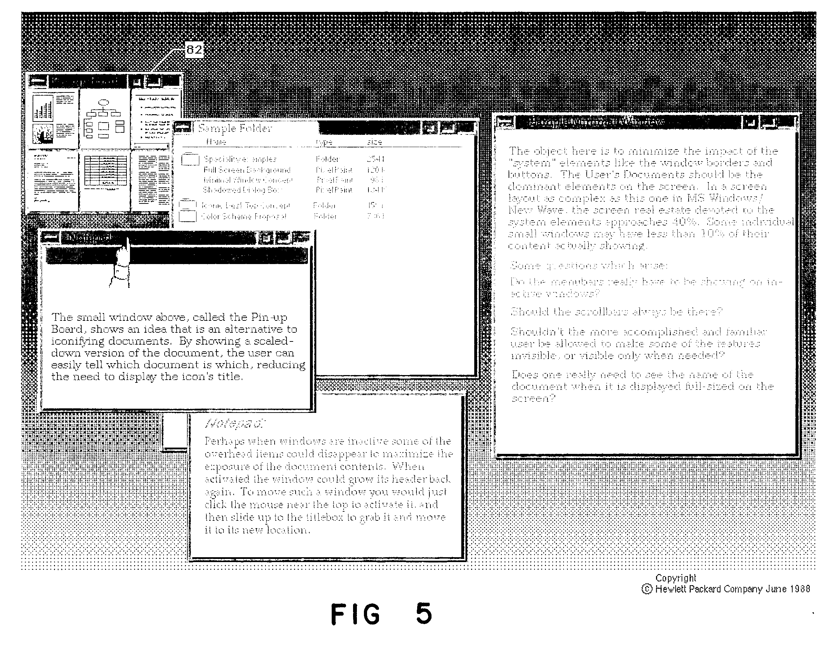

In accordance with one aspect of the present invention, standardized icons are not used for applications. Instead, a scaled-down version of the contents of a window is created when the user exits the window and issues a command to minimize the file. Referring to Figure 5, the various scaled-own versions of the files appear in a special window 82, which is labeled a pinup board. This arrangement provides an orderly, small area on the screen in which a number of documents can be held until they are needed again. Although the scaled down versions of the documents may not be readable, they are recognizable by the user. This approach utilizes a person's ability to instantaneously sort and classify items on a visual basis. Thus, with the use of the pinup board containing scaled-own versions of window contents, the user can find a document such as an organization chart, for example, much faster than if he were required to read icon titles.

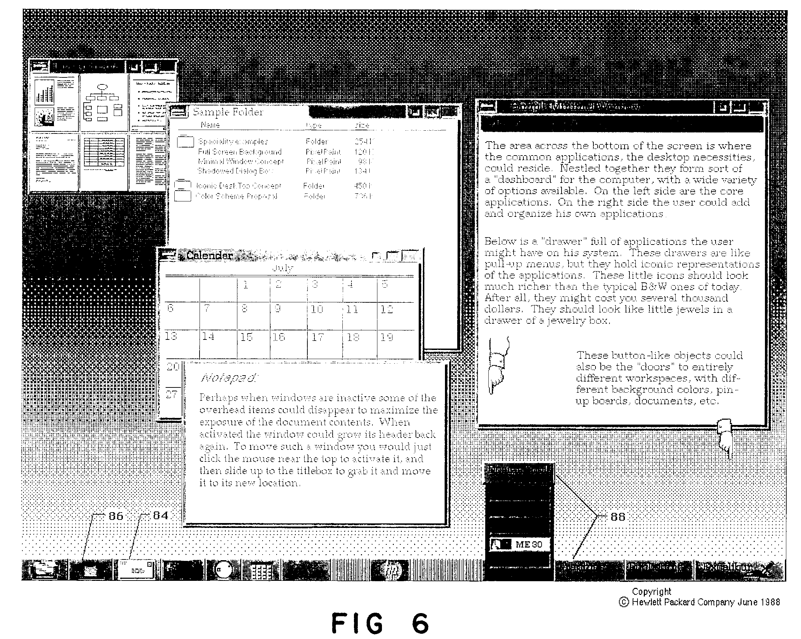

There are certain types of basic functions performed with personal computers that readily lend themselves to the use of icons. For example, some of these functions may include mail, phone directories, time management and calendars, address files, etc. Each of these functions which are sometimes referred to as "desktop accessories", can be represented by an icon 84, 86 having a symbol related to the function, as shown in Figure 6. To provide the user with ready and familiar access to each of these functions, the icons are preferably always accessible, regardless of the work the user is doing. In accordance with one aspect of the invention, they are located at a fixed place within the visual display and arranged in a fixed order, so that the user becomes familiar with their placement and can easily access them. In the example illustrated in Figure 6, all the icons pertaining to standard functions are located in a line along the bottom of the display in a predetermined order, providing a visual metaphor similar to the dashboard in an automobile. Specifically, the functions available on the dashboard are always present at a fixed location for the user, regardless of the view that appears on the main part of the screen. When the user selects one of the icons, for example the mail icon 84, a mail window or menu will be generated. This window or menu provides the user with the means for selecting various tasks associated with the mail operation, such as reading new mail, sending mail to another person, or accessing and reading old mail files. When the user has completed the mail-related operations, the window is put away and the icon 84 reappears on the dashboard at the bottom of the screen.

As shown in Figure 6, the icons pertaining to standard functions are present at the left half of the dashboard. The right portion of the dashboard is similar in nature, but contains functions that are tailored to the specific needs of the user. Within this portion of the dashboard, the user can organize other applications into individual drawers 88. Applications having related functions can be grouped in a single drawer. For example, one drawer could be labeled "desk top publishing" and include applications such as an outliner, a text processor, a drawing program, a scanner interface, and a page layout program. In essence, the various drawers on the dashboard become work spaces in which related functions are grouped, similar to a real life situation in which belongings are grouped according to various relational patterns. By accessing a particular drawer 88, a visual metaphor is created in which the drawer is pulled up out of the dashboard, and icons of the various applications contained within that drawer are displayed.

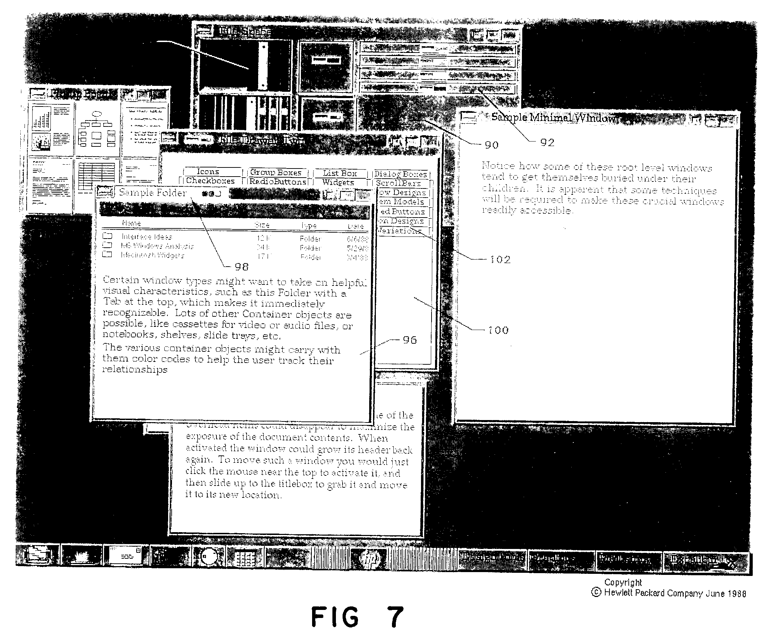

Another visual metaphor that can be employed to facilitate use of the computer pertains to the area of files. Information is stored within computers according to various file and file structures that bear little resemblance to everyday physical experiences. As a result, many users of computers have difficulty conceptualizing the files and their organization. In accordance with a feature of the present invention, the filing structure can be made much more visual, as well as spatial in concept. To this end, a visually oriented file space is provided in a background window 90, as shown in Figure 7. This space is provided with shelves and drawers, to utilize a person's greater ability to recall the locations of objects when they are stored spatially and visually, rather than merely by name.

Within the file space 90, different types of containers for documents and files can be displayed. For example, these containers can be drawers 92 of different sizes and shapes, notebooks 94 and other storage media, such as slide trays, video disks, books, etc. When a particular drawer or notebook is opened, or other type of storage media is accessed, a window 96 is created which can have a shape that represents a distinguishing characteristic of the accessed object. For example, a window 100 representative of a drawer that has been opened can illustrate a plurality of folders 102 which are arranged in a particular hierarchy recognizable to the user. When one of these folders is accessed, a new window 96 is created which has a tab 98, characteristic of the appearance of a folder.

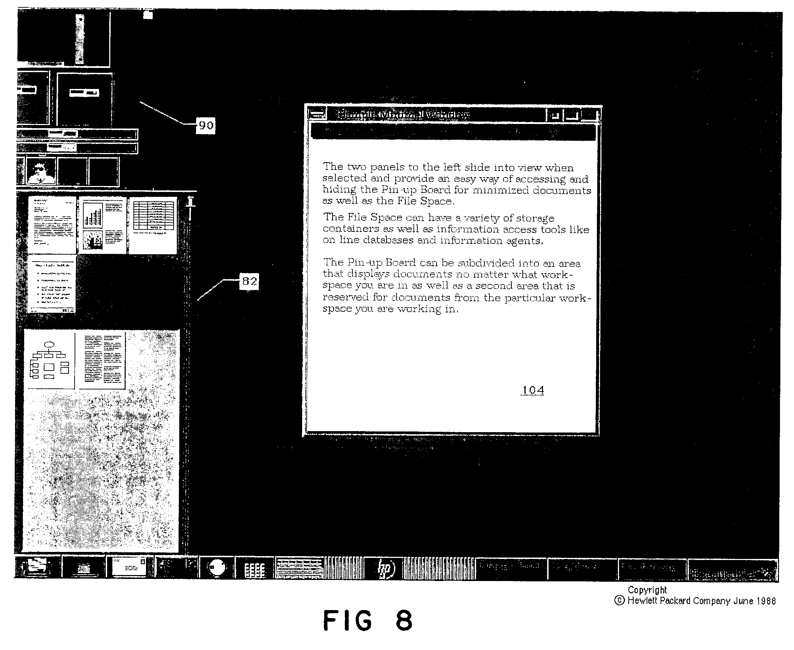

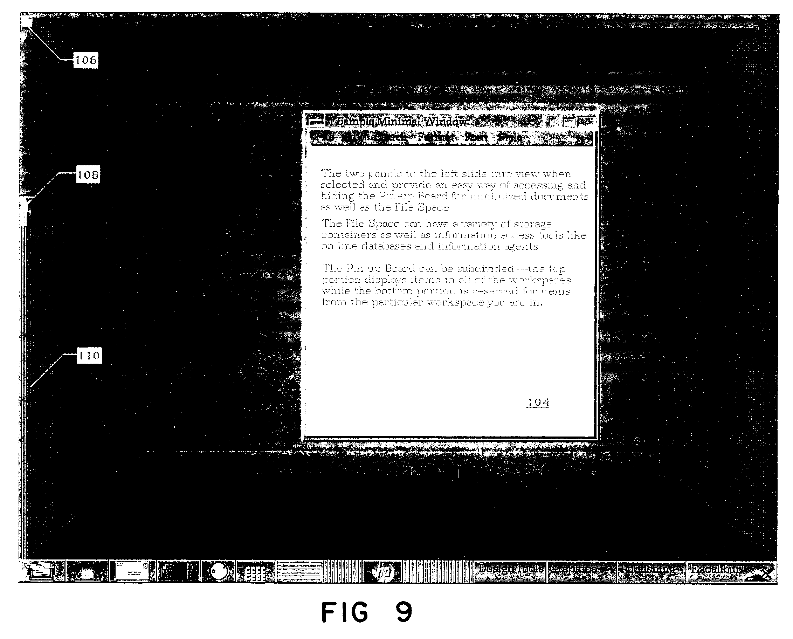

As discussed previously, it is desirable to minimize the display of function-related information that is not currently being used, to thereby maximize the area available for the main work space. However, for functionally related displays such as the file space 90 and the pinup board 82, the user should be continuously provided with quick access to them. To this end, these two windows can be provided on sliding panels that always remain open, but are not always in the background of the screen. Figure 8 illustrates a video screen having a main workspace window 104 and two sliding panels respectively relating to the pinup board 82 and the file space 90. When the user does not require access to the functions provided by each of these latter windows, they can be slid to the left, to effectively hide them behind the left edge of the screen. The resulting display would be as shown in Figure 9, in which only the main workspace window 104 is visible. The two sliding panels are represented by a pair of symbols 106 and 108 which appear on a narrow strip 110 at the left edge of the screen. By selecting either of these symbols, the user can cause the appropriate functional window to slide to the right and thereby become visible, to access the files contained therein.

Referring again to Figure 8, a further aspect of the pinup board 82 is illustrated Specifically, the pinup board is divided into upper and lower sections. The upper section 112 can contain reduced representations of core functions that are universal in their applicability. For example, some of these functions might comprise a listing of things to do for the day, a reminder of a meeting to attend, or the like. These functions would remain displayed on the upper section of the board during the day, regardless of the particular work space the user is operating in.

In the lower half 114 of the pinup board, the reduced files appearing therein relate to the particular work space that is presently active. Thus, if the user should change work spaces, for example by going from one window to another, the documents that appear in the lower portion 114 of the pinup board will change in accordance with the new work space. Thus, for example, as the user goes from a word processing program to a spreadsheet program, the items appearing on the lower portion 114 of the pinup board could change from files created within the word processing system to previously created worksheets pertaining to the spreadsheet program.

A similar concept can be applied to the file space as well. Particularly, as the user changes from one work space to another, the configuration of the file space can change, to reflect the different storage needs associated with different types of work spaces.

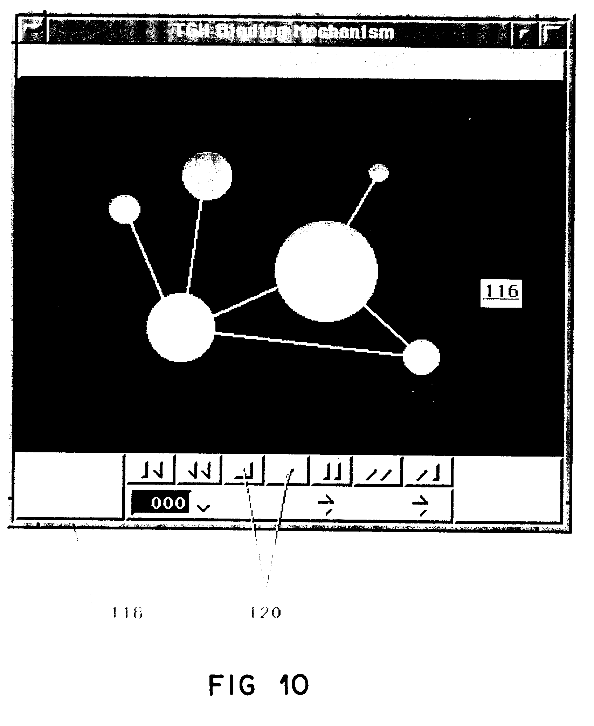

In many instances computers are being used to emulate the functions of other types of machines. For example, animation can be stored in the memory of the computer and displayed an the video screen to provide video action, similar to the playing of a tape on a video tape recorder. During such an operation, a window which simulates the controls on the video recorder can be provided on the video screen, as illustrated in Figure 10. Referring thereto, the stored animation is displayed within a workspace 116 formed by a standard window 118. At the bottom of the window, a control panel of a conventional video cassette recorder is displayed. This control panel includes buttons 120 corresponding to the typical functions provided by such a recorder, for example play, fast forward, rewind, etc. By individually accessing these buttons, for example by means of a mouse, the user can cause the animation displayed within the work space 116 to behave in the same manner as the results of playing a tape on a video cassette recorder.

Other types of hardware which can be emulated within a computer can similarly have accompanying windows which simulate the control panels appearing on such hardware. For example, if the computer is used to emulate a television, the normal controls of a television can be illustrated at the bottom or the side of a suitable window.

In addition to simulating hardware elements, the present invention provides a dynamic metaphor for depicting a software function as it is being carried out by the computer. One such function is the transmission of data between a first computer and a remote location such as a second computer remotely located from the first. The visual metaphor that is used to represent this function is referred to as a transporter.

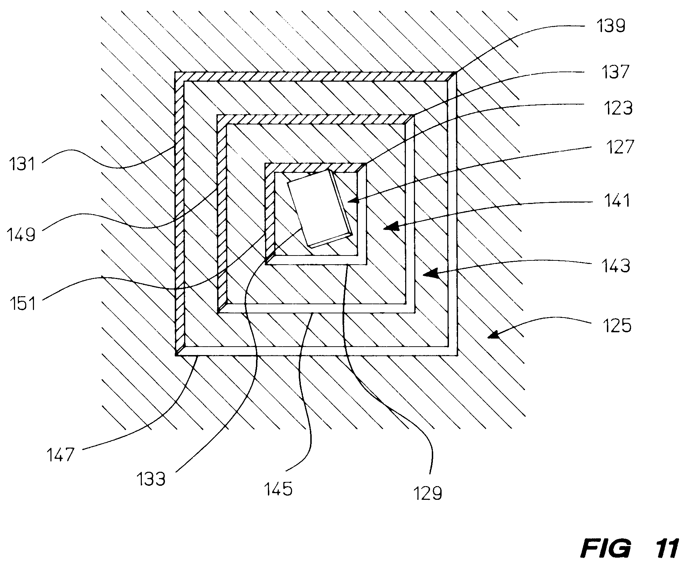

As shown in FIG. 11, a method of depicting a transmission of data according to the invention includes displaying a frame 123 against a background 125 (indicated in FIG. 11 by diagonal lines) on a video screen, the frame 123 enclosing a data transport region 127 of the screen; highlighting a portion 129 of the frame 123 by displaying such portion in a relatively lighter color than that of the background and shading a portion 131 of the frame 123 opposite the highlighted portion 129 by displaying it in a relatively darker color than that of the background; and displaying, in the data transport region 127, at least a portion of an image 133 of an icon representative of data to be transmitted between the computer and the remote location. The icon preferably resembles a document such as a sheet of paper or the like. Preferably the entire image is in the transport region, but a portion of the image may overflow out of the transport region if desired.

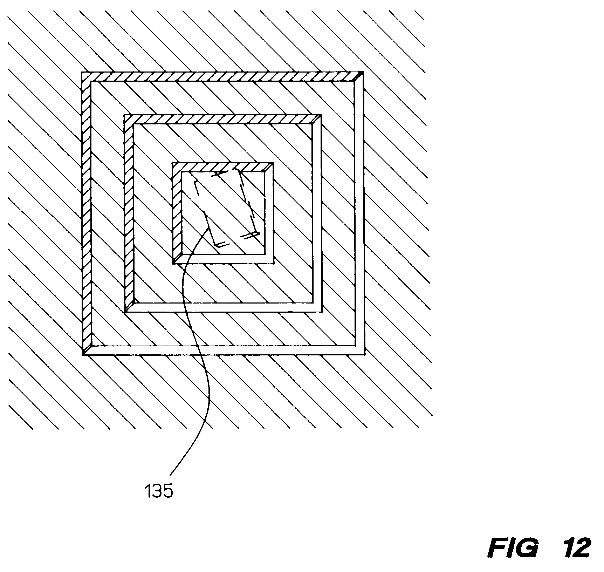

Transmission of data represented by the icon image 133 is depicted by varying the image between a relatively distinct image, as shown in FIG. 11, and a relatively indistinct image 135, as shown in FIG. 12. As the image becomes less distinct over a time interval of a few seconds, the visual impression is that the image is fading away, and in a preferred embodiment the image entirely disappears as the data is transmitted from the user to the remote location. As the image becomes more distinct, the visual impression is that the image is materializing, and in a preferred embodiment the display starts with no icon image at all and the image gradually materializes over a period of several seconds until it forms a sharp image of the icon, thereby indicating the reception of data from the remote location. Thus, the transmission of data from one computer to another is depicted by the gradual disappearance of an icon representing the data on the screen of the sending computer and the gradual appearance of a similar icon on the screen of the receiving computer.

When the user wishes to initiate a transmission of data from the computer to a remote location, the user places an icon image representing the data in the data transport region 127, tor example by dragging it there with a mouse or other pointing device. Of course, depending upon the mode of operation of the computer, the document could be placed in the transport region in response to an appropriate keyboard command.

After the icon has been placed in the transport region, transmission begins, for example in response to an appropriate transmit command from the user, and the image gradually becomes less distinct, preferably fading away entirely as the data is transmitted. If the user is receiving data, an icon image gradually appears in the transport region to indicate that data is being received. The user moves the icon out of the transport region to place the data in a local file in the computer or to make other use of it, as desired.

Making the image more or less distinct is accomplished in software by adding or deleting pixels from among a group all of which make up a complete, distinct image.

In a preferred embodiment the transmission of data is depicted by displaying not just the frame 123 but a plurality of frames of successively larger sizes such as, in addition to the frame 123, a frame 137 and a frame 139. Each frame except the largest is nested within the frame of next larger size. Thus the frame 123 is nested within the next larger frame 137, and the frame 137 in turn is nested within the largest frame 139. Portions of the background are visible in spaces between the frames; specifically, a portion 141 of the background is visible between the frames 123 and 137 and a portion 143 of the background is visible between the frames 137 and 139. A portion of each frame is highlighted by displaying that portion in a relatively lighter color than that of the background; specifically, portions 145 and 147 of the frames 137 and 139 are so highlighted. Similarly, portions 149 and 151 opposite the highlighted portions 145 and 147, respectively, are shaded by means of a relatively darker color than that of the background. The frames are oriented such that their highlighted portions are adjacent one another and their shaded portions are adjacent one another.

Preferably, the spaces between the frames are sequentially emphasized, for example by changing color, to convey a direction of transmission of the data in the transport region. For example, to visually depict transmission from the computer to the remote location, the sequential emphasizing proceeds from the space 143 between the two largest frames toward the space 141 between the two smallest frames, thereby simulating motion away from the user. The background outside the largest frame and the background in the transport region may be included in this sequential emphasizing if desired, for example by emphasizing first the background around the largest frame, then the space 143, then the space 141, then the background in the transport region. Conversely, to visually depict reception from the remote location, the sequential emphasizing proceeds from the space between the two smallest frames toward the space between the two largest frames, thereby simulating motion toward the user.

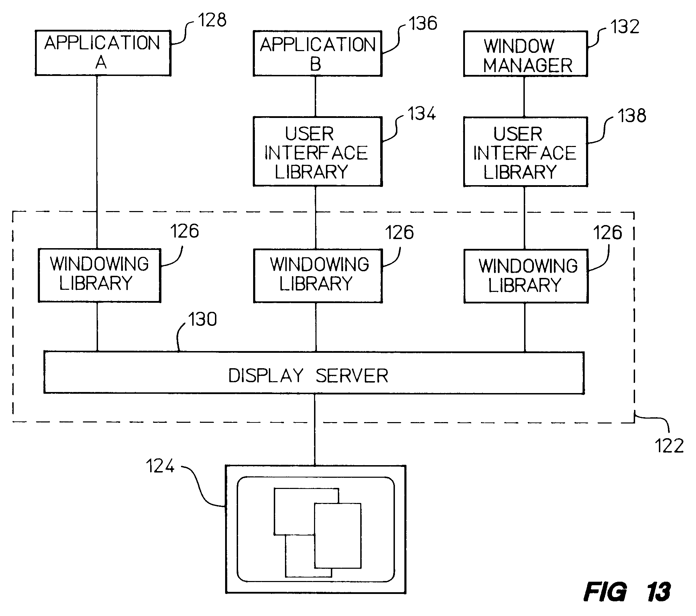

A functional block diagram of a system in which the foregoing principles of the present invention can be implemented is illustrated in Figure 13. The system operates in conjunction with a conventional windowing system 122, such as the X WINDOW SYSTEM developed and distributed by the Massachusetts Institute of Technology (MIT). Basically, the windowing system comprises a set of graphics routines which enable an application to create and manipulate communication regions, i.e., windows, on the screen of a video terminal 124. These routines are contained in windowing libraries 126. When an application program 128 needs to place information on the screen, it requests a window from the windowing system 122. The appropriate routines are called from the windowing library and the necessary graphics are displayed on the screen, along with the data from the applications program, through a display server 130 which accesses the display through the computer's operating system.

A window manager 132 and user interface libraries 134 are also provided in the system. The user interface libraries 134 contain subroutines for the generation of components that are associated with specific features of the application program. Thus, for example, when an application program 136 requests a window to display a dialog box or a menu, the appropriate subroutines are called from the user interface library to generate the images of the dialog box panel and the buttons on that panel, in a conventional manner.

The window manager 132 provides for the generation of graphic effects which might be considered to be more generic to the overall display rather than specific to an application program. These effects include the shading and highlighting of the frames for individual windows, the highlighting and shading of icons, and the generation of shadows. Again, these effects are created by means of subroutines which may be stored within the window manager itself or in a separate user interface library 138.

In operation, the window manager provides information pertaining to the generation of all of the three-dimensional effects in response to user entered commands that are not specific to an application program. To this end, the window manager, when it is first placed into operation, requests the windowing system to inform it of events which may have an effect upon the displayed image, such as actuation of a mouse button. Whenever such an event occurs, the windowing system notifies the window manager of it through the display server 130. In response, the window manager examines the particular event and determines whether it is one which affects any portion of the display over which it has control, for example actuation of a system menu button. If so, the window manager takes the appropriate action, e.g., calling the user interface subroutine to inverse the highlighting and shading of the button to indicate that it has been pushed. If, on the other hand, the event is one over which the window manager does not exercise control, the display server passes the event on to the application program for service thereby.

It will be appreciated by those of ordinary skill in the art that the present invention can be embodied in other specific forms without departing from the spirit or essential characteristics thereof. The presently disclosed embodiments are therefore considered in all respects to be illustrative and not restrictive. The scope of the invention is indicated by the appended claims rather than the foregoing description, and all changes that come within the meaning and range of equivalents thereof are intended to be embraced therein.

**Claims**

1. A method of graphically depicting the operation of a computer in a computer video display of the kind which provides a plurality of representations of windows (64, 66, 68), the windows being associated with tasks performed by the computer to provide a visual interface between a user and the computer, comprising the steps of:

   depicting a functional aspect of a task by means of a three-dimensional abstraction (84, 86, 88) suggestive of that functional aspect; and

   depicting the operation of the computer by varying the appearance of the abstraction over time.

2. A method according to claim 1 wherein:

   depicting the functional aspect comprises generating a three-dimensional abstraction (33) suggestive of a workspace in which a portion of an open file is visible, and

   depicting the operation comprises providing a window (82) for displaying inactive files, displaying a scaled-down version of the abstraction of the workspace area and the file in said window, and removing any display of the file from any other visible window, thereby indicating any files which are open for use but not currently active.

3. A method as in claim 2 and further comprising the step of enabling the user selectively to remove the inactive file window from the display when access to inactive files is not needed and to retrieve the inactive file window when access to an inactive file is desired.

4. A method as in claim 3 wherein removing the inactive file window comprises causing the window to appear to slide behind a portion (110) of a border (35) of the display.

5. A method as in claim 2 wherein depicting the operation comprises grouping any abstractions suggestive of files that are associated with an active workspace into a first portion (114) of the inactive file window (82) and changing the display of abstractions in the first portion according to any change from one active workspace to another, whereby the abstractions that are being displayed in the first portion at any given time are associated with that workspace which is then active.

6. A method according to claim 1 wherein:

depicting the functional aspect comprises generating a linear array of three-dimensional abstractions (84, 86, 88) along an edge of the video display, a first portion of the array having a plurality of abstractions (84, 86) each suggestive of a function accessible without respect to any particular application being executed by the computer, and a second portion of the array having a plurality of abstractions (88) each suggestive of a group of applications, and

depicting the operation comprises expanding an abstraction of the second portion of the array to provide a plurality of choices each associated with an application in the group, whereby the user can access a function suggested by an abstraction in the first portion of the array by selecting that abstraction and the user can access an application in a group suggested by an abstraction in the second portion of the array by first expanding that abstraction and then selecting one of the resulting choices.

7. A method as in claim 6 wherein expanding an abstraction is depicted by a visual simulation of opening a drawer which contains a plurality of abstractions each indicative of one of the choices.

8. A method as in claim 1 wherein depicting the functional aspect comprises generating a three-dimensional abstraction suggestive of a file cabinet (90) having containers (92, 94) for files and other objects and a plurality of three-dimensional abstractions suggestive of objects stored in the containers.

9. A method as in claim 8 wherein depicting the operation comprises displaying a window (100, 96) having three-dimensional features suggestive of an object (92, 102) in the cabinet (90) in response to a selection of that object by a user, thereby suggesting removal of the object from the cabinet and opening of the object for use.

10. A method as in claim 1 wherein a task comprises emulating a device, depicting the functional aspect comprises displaying a plurality of abstractions (120) suggestive of controls of the device being emulated, and depicting the operation comprises manipulating a display associated with the emulation according to user selection of various ones of the displayed controls.

11. A method as in claim 1 wherein:

depicting the functional aspect comprises displaying a frame (123) against a background (125) and placing in the frame an abstraction (133) suggestive of data to be transmitted between the computer and a remote location, and

depicting the operation comprises varying the display of the frame and the data abstraction over time in a manner suggestive of transmission of the data between the computer and the remote location.

12. A method as in claim 11 wherein varying the display comprises varying the data abstraction between a relatively distinct image (133) and a relatively indistinct image (135) to represent materialization and dematerialisation of the data.

13. A method as in claim 11 wherein varying the display comprises alternately highlighting first and second portions of the frame by displaying the highlighted portion (129) in a relatively lighter color than that of the background and shading a portion (131) of the frame opposite the highlighted portion by displaying it in a relatively darker color than that of the background to represent motion of the data.

14. A method as in claim 11 wherein:

depicting the functional aspect comprises displaying a plurality of frames (137, 139) of successively larger sizes, each frame except the largest being nested within the frame of next larger size, and

depicting the operation comprises sequentially highlighting portions of successive ones of the frames from the largest to the smallest and varying the data abstraction from a relatively distinct image to a relatively indistinct image to simulate motion of the data away from the user and thereby to represent transmission of a message from the user to the remote location.

15. A method as in claim 11 wherein:

depicting the functional aspect comprises displaying a plurality of frames (137, 139) of successively larger sizes, each frame except the largest being nested within the frame of next larger size, and

depicting the operation comprises sequentially highlighting portions of successive ones of the frames from the smallest to the largest and varying the data abstraction from a relatively indistinct image to a relatively distinct image to simulate motion of the data toward the user and thereby to represent reception of a message from the remote location.

FIG 1A

FIG 1B

FIG 1C

FIG 1D

FIG 2

**FIG 2A**

## Sample Folder

| Name | type | size |
|---|---|---|
| Spaciality examples | Folder | 254 K |
| Full Screen Background | PixelPaint | 120 K |
| Minimal Window Concept | PixelPaint | 98 K |
| Shadowed Dialog Box | PixelPaint | 104 K |
| Iconic Desk Top Concept | Folder | 450 K |
| Color Scheme Proposal | Folder | 706 K |

**31**

### Notepad:

**31**

Perhaps when windows are inactive some of the overhead items could disappear to maximize the exposure of the document contents. When activated the window could grow its header back again. To move such a window you would just click the mouse near the top to activate it, and then slide up to the titlebox to grab it and move it to its new location.

### Search

**33**

The main principle is to make the User's area of the screen the dominant visual elements, and to minimize the System Overhead elements like the window borders, scrollbars, menubars, etc.

This window uses highlighting the document background as the means of identifying the active window. Also, menubars are eliminated from the inactive windows, where they cannot be used anyway.

The minimal scrollbar below will grow to an easi to-use size when the cursor gets into its region, stays visually small most of the time. The bright portion of the shadow indicates the portion of th screen being displayed.

**37**

## FIG 3

FIG 4

**Sample Folder**

| Name | type | size |
|---|---|---|
| Speciality examples | Folder | 254 K |
| Full Screen Background | PixelPaint | 120 K |
| Minimal Window Concept | PixelPaint | 98 K |
| Shadowed Dialog Box | PixelPaint | 134 K |
| Iconic DeskTop Concept | Folder | 450 K |
| Color Scheme Proposal | Folder | 736 K |

The small window above, called the Pin-up Board, shows an idea that is an alternative to iconifying documents. By showing a scaled-down version of the document, the user can easily tell which document is which, reducing the need to display the icon's title.

*Notepad:*

Perhaps when windows are inactive some of the overhead items could disappear to maximize the exposure of the document contents. When activated the window could grow its header back again. To move such a window you would just click the mouse near the top to activate it, and then slide up to the titlebox to grab it and move it to its new location.

The object here is to minimize the impact of the "system" elements like the window borders and buttons. The User's Documents should be the dominant elements on the screen. In a screen layout as complex as this one in MS Windows/New Wave, the screen real estate devoted to the system elements approaches 40%. Some individual small windows may have less than 10% of their content actually showing.

Some questions which arise:

Do the menubars really have to be showing on inactive windows?

Should the scrollbars always be there?

Shouldn't the more accomplished and familiar user be allowed to make some of the features invisible, or visible only when needed?

Does one really need to see the name of the document when it is displayed full-sized on the screen?

# FIG 5

EP 0 483 777 A2

EP 0 483 777 A2

Sample Folder

| Name | type | size |
|---|---|---|
| Speciality examples | Folder | 254 K |
| Full Screen Background | PixelPaint | 120 K |
| Minimal Window Concept | PixelPaint | 98 K |
| Shadowed Dialog Box | PixelPaint | 134 K |
| Iconic DeskTop Concept | Folder | 450 K |
| Color Scheme Proposal | Folder | 736 K |

The area across the bottom of the screen is where the common applications, the desktop necessities, could reside. Nestled together they form sort of a "dashboard" for the computer, with a wide variety of options available. On the left side are the core applications. On the right side the user could add and organize his own applications.

Below is a "drawer" full of applications the user might have on his system. These drawers are like pull-up menus, but they hold iconic representations of the applications. These little icons should look much richer than the typical B&W ones of today. After all, they might cost you several thousand dollars. They should look like little jewels in a drawer of a jewelry box.

These button-like objects could also be the "doors" to entirely different workspaces, with different background colors, pin-up boards, documents, etc.

July

| | 1 | 2 | 3 | 4 | 5 |
|---|---|---|---|---|---|
| 6 | 7 | 8 | 9 | 10 | 11 | 12 |
| 13 | 14 | 15 | 16 | 17 | 18 | 19 |
| 20 | | | | | | |
| 27 | | | | | | |

*Notepad:*

Perhaps when windows are inactive some of the overhead items could disappear to maximize the exposure of the document contents. When activated the window could grow its header back again. To move such a window you would just click the mouse near the top to activate it, and then slide up to the titlebox to grab it and move it to its new location.

86  84

88

ME 80

FIG 6

22

Icons | Group Boxes | List Box | Dialog Boxes
Checkboxes | RadioButtons | Widgets | ScrollBars

Sample Folder

| Name | Size | Type | Date |
|---|---|---|---|
| Interface Ideas | 12 K | Folder | 6/6/88 |
| MS Windows Analysis | 04 K | Folder | 5/29/8 |
| Macintosh Widgets | 17 K | Folder | 3/4/88 |

98

Certain window types might want to take on helpful visual characteristics, such as this Folder with a Tab at the top, which makes it immediately recognizable. Lots of other Container objects are possible, like cassettes for video or audio files, or notebooks, shelves, slide trays, etc.

The various container objects might carry with them color codes to help the user track their relationships

96

90    92

Notice how some of these root level windows tend to get themselves buried under their children. It is apparent that some techniques will be required to make these crucial windows readily accessible.

102

100

...e of the exposure of the document contents. When activated the window could grow its header back again. To move such a window you would just click the mouse near the top to activate it, and then slide up to the titlebox to grab it and move it to its new location.

FIG 7

EP 0 483 777 A2

The two panels to the left slide into view when selected and provide an easy way of accessing and hiding the Pin-up Board for minimized documents as well as the File Space.

The File Space can have a variety of storage containers as well as information access tools like on line databases and information agents.

The Pin-up Board can be subdivided into an area that displays documents no matter what workspace you are in as well as a second area that is reserved for documents from the particular workspace you are working in.

104

90

82

# FIG 8

106

108

110

The two panels to the left slide into view when selected and provide an easy way of accessing and hiding the Pin-up Board for minimized documents as well as the File Space.

The File Space can have a variety of storage containers as well as information access tools like on line databases and information agents.

The Pin-up Board can be subdivided---the top portion displays items in all of the workspaces, while the bottom portion is reserved for items from the particular workspace you are in.

104

FIG 9

**FIG 10**

FIG 11

EP 0 483 777 A2

FIG 12

135

FIG 13

APPLICATION A — 128

APPLICATION B — 136

WINDOW MANAGER — 132

USER INTERFACE LIBRARY — 134

USER INTERFACE LIBRARY — 138

WINDOWING LIBRARY — 126

WINDOWING LIBRARY — 126

WINDOWING LIBRARY — 126

DISPLAY SERVER — 130

122

124